# EUROPEAN PATENT APPLICATION

(11) **EP 1 511 248 A2**
(43) Date of publication of application: **02.03.2005**
(21) Application number: 04254404.9
(22) Date of filing: 23.07.2004
(51) Int. Cl.: H04L 12/56

(54) **System and method for discovery of BGP router topology**

(30) Priority: 29.08.2003 US 651585
(71) Applicant: Agilent Technologies Inc, Palo Alto, CA 94306-2024 (US)
(72) Inventor: Tatman, Lance A., Fremont, CA 94536 (US)
(74) Representative: Exell, Jonathan Mark

(57) **Abstract**

A system and method for discovering a routing topology within a domain of interest are disclosed. In accordance with certain embodiments, a Border Gateway Protocol ("BGP") discovery engine 301 is provided that enables auto-discovery of BGP routers in a specified domain of interest. For instance, such a BGP discovery engine may receive 501, as input, an identification of a domain of interest and a "seed" BGP router within such domain of interest, and may recursively query 503, 508 the BGP routers identified within the domain of interest for information to compile 505, 510 the topology of such BGP routers in such domain of interest.

## Description

### TECHNICAL FIELD

The present invention relates in general to discovery of intradomain and interdomain routers within a selected domain of interest, and more specifically to a system and method for discovering Border Gateway Protocol ("BGP") router topology within a domain of interest.

### BACKGROUND OF THE INVENTION

The Internet has developed into a loose confederation of cooperatively competitive Internet Service Providers (ISPs). Information about the networks reachable by each ISP is generally communicated by use of the Border Gateway Protocol (BGP). This protocol was designed to allow ISPs to exchange routing information between each other. Each ISP maintains a set of routers (specialized devices that forward packets between networks) that are interconnected with each other, and typically, at the logical edge of the ISP's network, to other ISP's routers.

Since the management of a large system of interconnected computer networks can prove burdensome, smaller groups of computer networks may be maintained as autonomous systems (ASs) or routing domains within a company. More commonly, each company maintains a single AS. The routers within a routing domain typically communicate routes via "intradomain" routers and routing protocols. "Interdomain" routers executing interdomain routing protocols are used to interconnect nodes of the various routing domains. An example of an interdomain routing protocol is BGP, which performs routing between ASs by exchanging routing and reachability information among interdomain routers of the systems. Interdomain routers configured to execute the BGP protocol, called BGP routers, maintain routing tables, transmit routing update messages, and render routing decisions based on routing metrics.

Each BGP router maintains a routing table (related to BGP) that lists all feasible paths to a particular network. BGP peer routers, residing both in and outside the AS or ASs, exchange routing information under certain circumstances. Incremental updates to the routing table are generally performed. For example, when a BGP router initially connects to a peer router, they may exchange the entire contents of their routing tables. Thereafter when changes occur to those contents, the routers exchange only those portions of their routing tables that change in order to update their peers' tables. The BGP routing protocol is well-known and described in further detail in "Request For Comments (RFC) 1771," by Y. Rekhter and T. Li (1995), and "Interconnections, Bridges and Routers," by R. Perlman, published by Addison Wesley Publishing Company, at pages 323-329 (1992), the disclosures of which are hereby incorporated herein by reference.

Unfortunately, networks are susceptible to failure. With the great reliance placed on communication networks in today's information-based economy, network failure can have severe implications to organizations that rely upon those networks as a primary conduit for information. Network management, in general, refers to the process of maintaining the integrity of a network. It typically involves such functions as observing the state of network elements and services, monitoring network traffic, troubleshooting the network, making changes to the network, and ensuring that changes made to the network have the desired effect. Network management has become increasingly important as the size, diversity, and reliance upon communication networks, such as the Internet, have grown. Accordingly, high-quality network management has become increasingly important.

Network managers face a plethora of complex technical challenges. For instance, network components may be diverse and physically dispersed, and, in many environments, networks are subjected to almost continual changes as devices, such as routers, etc., are added or deleted. Thus, network managers typically have the difficult task of keeping track of the various devices within a network, as well as the state of each device, and detecting and troubleshooting problems as they arise in an attempt to minimize disruption to the network.

To aid a network manager, various network management tools (e.g., computer programs) have been developed. For example, tools are available for monitoring network elements and network services. Configuration management tools can produce audit trails that indicate the history of changes to routing device configurations and network management stations may be implemented to collect information from network probes and present a network manager with data representing the state of the network.

### BRIEF SUMMARY OF THE INVENTION

The present invention is directed to a system and method for discovering a routing topology within a domain of interest. More specifically, certain embodiments enable a topology of routers that communicate via a particular protocol (e.g., BGP) to be discovered for a domain of interest. In accordance with certain embodiments, a BGP discovery engine is provided that enables auto-discovery of BGP routers in a specified domain of interest. For instance, such a BGP discovery engine may receive, as input, an identification of a domain of interest and a "seed" BGP router within such domain of interest, and may recursively query the BGP routers identified within the domain of interest for information to compile the topology of such BGP routers in such domain of interest. For example, the BGP discovery engine may first query the seed BGP router for its peer table, and may then query each peer router identified in the peer table for their respective peer routers; and so on, until the BGP discovery engine has queried each BGP router in the domain of interest and used the information received therefrom to compile a topology of the BGP routers in such domain of interest.

According to one embodiment, described further below, an operator (e.g., network manager) seeds the discovery engine with identification of a single BGP router (e.g., the BGP router's name or IP address), identification of one or more Autonomous Systems (ASs) of interest (e.g., the AS Number for the one or more ASs forming the domain of interest), and SNMP access information. Using this information, the discovery engine recursively queries the BGP routers discovered in the domain of interest to compile the IP address, name, and peer list of all BGP-speaking routers in the domain of interest.

Accordingly, embodiments of the present invention enable the topology of routers (e.g., BGP routers) within a domain of interest to be accurately and efficiently compiled with minimal effort required on the part of the operator (e.g., network manager). Embodiments of the BGP discovery engine may be used in various applications for self-populating such applications with information regarding the topology of BGP routers within a domain of interest, including without limitation network management systems, routing management software, network mapping tools, router configuration tools, and/or any other application where the knowledge of BGP peer topology is desired.

In accordance with certain embodiments, a method comprises receiving at a discovery engine identification of a domain of interest and identification of a seed router within the domain of interest. The discovery engine queries the seed router for information including identification of its peer routers, and the discovery engine receives the information from the seed router. From the information received from the seed router, the discovery engine determines at least one peer router of the seed router. The discovery engine then queries the determined at least one peer router of the seed router for information, including identification of its peer routers. The discovery engine compiles topology information for the routers within the domain of interest.

In accordance with certain embodiments, a BGP router discovery engine comprises computer-executable software code stored to a computer-readable medium, wherein such computer-executable software code comprises code for querying a seed BGP router within a domain of interest for information from its peer table. The computer-executable software code further comprises code for receiving the peer table information from the seed BGP router, code for determining from the peer table information received from the seed BGP router each peer router of the seed router, and code for querying each peer router of the seed router for information from its respective peer table. The BGP router discovery engine further comprises a processor for executing the computer-executable software code.

In accordance with certain embodiments, a system comprises means for recursively querying identified BGP routers within a domain of interest for their respective peer tables and identifying from their respective peer tables their respective peer BGP routers within the domain of interest. The system further comprises means for compiling from the information received from the queried BGP routers a topology of the BGP routers within the domain of interest.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated that the conception and specific embodiment disclosed may be readily utilized as a basis for modifying or designing other structures for carrying out the same purposes of the present invention. It should also be realized that such equivalent constructions do not depart from the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawing, in which:

FIGURE 1 shows a schematic block diagram of a typical computer network with which embodiments of the present invention may be utilized;

FIGURE 2 shows a schematic block diagram of a typical interdomain router;

FIGURE 3 shows an example block diagram of a system in which a BGP discovery engine of an embodiment of the present invention may be implemented;

FIGURE 4 shows another example system in which a BGP discovery engine of an embodiment of the present invention may be implemented;

FIGURE 5 shows an example operational flow diagram of a BGP discovery engine according to one embodiment of the present invention; and

FIGURE 6 shows an example computer system on which a BGP discovery engine of an embodiment of the present invention may be implemented.

### DETAILED DESCRIPTION OF THE INVENTION

A desire exists for a technique for discovering a routing topology, such as the BGP routers in a network and the relationships between them. Using traditional network management techniques/systems, a network manager may be able to discover all devices in a network, including hosts and routers that are not involved in BGP at all. It is often desirable to limit (or focus) that discovery just to BGP routers. For example, there are instances where a network manager may desire to monitor or view BGP routers and BGP routers only (e.g., for implementing certain triggers or rules within the network management system for viewing BGP topology). Traditionally, a network manager is required to input a lot of information for each BGP device that is to be monitored.

Using traditional techniques, if a network manager desires to set a monitor for BGP routers in a network, the network manager may query the network to discover all of the devices on the network, and then manually filter through that information to discover the BGP routers. In many instances, network managers maintain databases for their network that includes information about the various devices in the network. The network manager may search through the database and identify which routers in the network are BGP routers, and then create a flat file that lists those BGP routers and their relationships (e.g., who they are peered with). This technique may be used to populate a network management system with BGP router topology data. However, this technique is inefficient in that it requires the network manager to populate and maintain the database, and is highly prone to error because the network manager is required to manually enter the data.

As an example, to monitor all BGP routers in a network, traditional network management systems require a user (e.g., network manager) to manually input the Internet Protocol (IP) address or router name and Simple Network Management Protocol (SNMP) access information for each BGP router to be monitored, along with specific peering maps for each router including both external and internal peers. Even in a medium-sized network, this may take a substantial amount of time and is prone to errors in data entry and requires *a priori* knowledge of the topology of the BGP routers and peers in the network.

So, a desire exists for a technique to discover BGP router topology more accurately and more efficiently. More specifically, a desire exists for a technique for discovering BGP router topology that does not require a user to manually identify such topology (e.g., through searching a database or filtering through a list of all devices in a network).

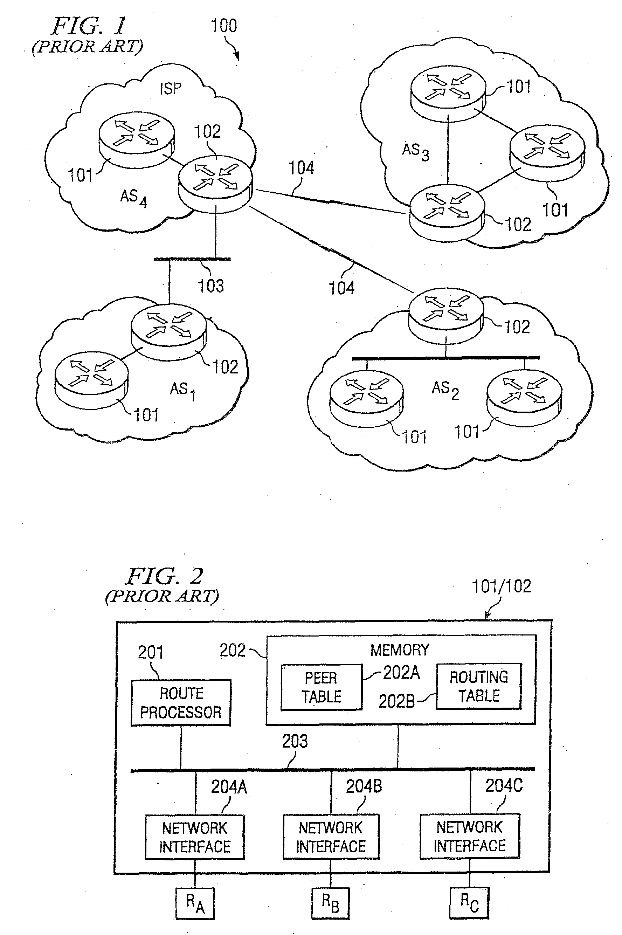

FIGURE 1 shows a schematic block diagram of a typical computer network 100 with which embodiments of the present invention may be utilized. Computer network 100 comprises a plurality of autonomous systems ("ASs") or routing domains interconnected by intermediate nodes, known as interdomain routers 102. As shown in the example of FIGURE 1, an Internet Service Provider's (ISP's) domain may include more than one routing domains (AS₄, AS₃) interconnected by interdomain routers 102. Interdomain routers 102; may be interconnected by shared medium networks 103, such as Local Area Networks (LANs), or point-to-point links 104, such as frame relay links, asynchronous transfer mode links or other serial links. Routers 101 and 102 may comprise BGP routers. Routers within a single AS that use BGP use Interior BGP (IBGP) to exchange routes with each other, while routers communicating across ASs using BGP use Exterior BGP (EBGP). As is well known, BGP is an Exterior Gateway Protocol (EGP) that is commonly used for routers within the Internet, for example, and the subtypes EBGP and IBGP are well defined by the protocol specification.

Each router typically comprises a plurality of interconnected elements, such as a processor, a memory and a network interface adapter. FIGURE 2 shows a schematic block diagram of a typical BGP speaking interdomain router 102 or intradomain router 101, comprising a route processor 201 coupled to a memory 202 and a plurality of network interface adapters 204A, 204B, and 204C via a bus 203. Network interfaces 204A-204C may be coupled to other BGP-speaking routers R_{A-C}. Memory 202 may comprise storage locations addressable by processor 201 and interface adapters 204A-204C for storing software programs and data structures, as is well-known in the art. For example, memory 202 may store data structures such as peer table 202A and routing table 202B.

Route processor 201 may comprise processing elements or logic for executing the software programs and manipulating the data structures. Generally, an operating system (OS), portions of which are typically resident in memory 202 and executed by route processor 201, functionally organizes the router by, *inter alia,* invoking network operations in support of software processes executing on the router. It will be apparent to those skilled in the art that other processor and memory means, including various computer-readable media, may be used within router 102 for storing and executing program instructions.

In order to perform routing operations in accordance with the BGP protocol, each BGP-speaking interdomain router 102, and intradomain router 101, generally maintains a peer table 202A that identifies the router's peer routers (i.e., a router with which this router maintains a BGP session) and a routing table 202B that lists all feasible paths to a particular network. The routers further exchange routing information using routing update messages when their routing tables change. The routing update messages are generated by an updating (sender) router advertising optimal paths to each of its neighboring peer (receiver) routers throughout the computer network. These routing updates allow the BGP routers to construct a consistent and up-to-date view of the network topology.

As described further below, embodiments of the present invention provide a system and method for discovering a routing topology within a domain of interest. More specifically, certain embodiments enable a topology of routers that communicate via a particular .protocol (e.g., BGP) to be discovered for a domain of interest. In accordance with certain embodiments, a BGP discovery engine is provided that enables auto-discovery of BGP routers in a specified domain of interest. For instance, such a BGP discovery engine may receive, as input, an identification of a domain of interest and a "seed" BGP router within such domain of interest, and may recursively query the BGP routers identified within the domain of interest for information to compile the topology of such BGP routers in such domain of interest. For example, the BGP discovery engine may first query the seed BGP router for its peer table, and may then query each peer router identified in the peer table for their respective peer routers, and so on, until the BGP discovery engine has queried each BGP router in the domain of interest and used the information received therefrom to compile a topology of the BGP routers in such domain of interest.

According to one embodiment, described further below, an operator (e.g., network manager) seeds the discovery engine with identification of a single BGP router (e.g., the BGP router's name or IP address), identification of one or more Autonomous Systems (ASs) of interest (e.g., the AS Number for the one or more ASs forming the domain of interest), and SNMP access information. Because SNMP may be used to either read or write information from/to a device, restrictions are placed on its use. Even the most basic read access requires a password or other access information or configuration. Using this information received by the discovery engine, the IP address, and peer list of all BGP-speaking routers in the domain of interest may be discovered. It should be recognized that the domain of interest need not be limited to a single AS. For example, if several ASs are under a single administrative domain, seeding the discovery engine with these AS numbers will allow the discovery across these ASs as well.

Embodiments of this invention take advantage of an attribute of BGP that requires all BGP routers in an AS to be fully meshed or connected to a route server in order to maintain route synchronization. By taking the seed address of a single BGP router and performing an SNMP query of the standard BGP management information base (MIB), the discovery engine can determine the peer table for the seed router. The peer table will include such information as the IP addresses and AS numbers of each router with which the seed router has been configured to peer. All routers in the peer table that have an AS that matches any AS in the seed table (i.e., any AS within the domain of interest) will be likewise queried for their respective peer tables. Those whose ASs do not appear in the AS seed list (i.e., are not within the domain of interest) will not be queried and are labeled external peers, which is also important topological information. Also included in the peer table is the status of each peering session. This status information enables the discovery engine to skip probing inactive peering sessions, but still use the information to populate the topology database (or "discovery table"). An inactive peering session indicates either that there is no TCP connectivity to the router or that the router has not been configured as a peer.

Accordingly, embodiments of the present invention enable the topology of routers (e.g., BGP routers) within a domain of interest to be accurately and efficiently compiled with minimal effort required on the part of the operator (e.g., network manager). Embodiments of the BGP discovery engine may be used in various applications for self-populating such applications with information regarding the topology of BGP routers within a domain of interest, including without limitation network management systems, routing management software, network mapping tools, router configuration tools, and/or any other application where the knowledge of BGP peer topology is desired.

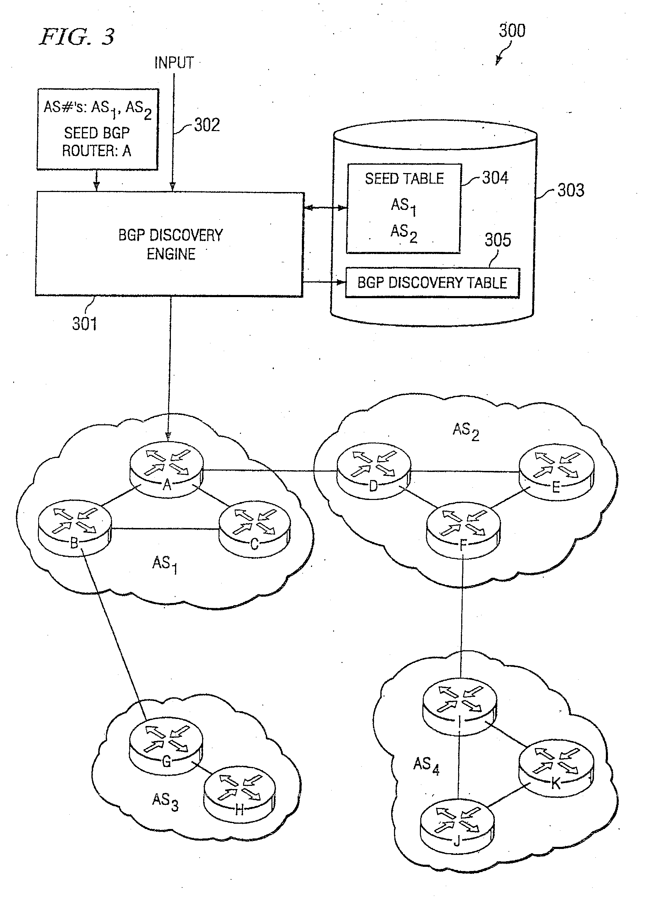

FIGURE 3 shows an example block diagram of a system 300 in which a BGP discovery engine 301 of an embodiment of the present invention may be implemented. As shown, system 300 comprises AS₁, AS₂, AS₃, and AS₄. AS₁ includes interdomain BGP routers A and B and intradomain BGP router C. AS₂ includes interdomain BGP routers D and F and intradomain BGP router E. AS₃ includes interdomain BGP router G and intradomain BGP router H, and AS₄ includes interdomain BGP router I and intradomain BGP routers J and K. BGP discovery engine 301 is communicatively coupled to data storage 303, which may comprise any suitable data storage device including memory (e.g., random access memory (RAM)), optical disc, floppy disk, etc. As described further below, BGP discovery engine 301 may store information to seed table 304 and BGP discovery table 305.

In accordance with an embodiment of the present invention, BGP discovery engine 301 is operable to populate BGP discovery table 305 with information regarding peer BGP routers of a particular domain of interest. For instance, BGP discovery engine 301 may be supplied (e.g., from a user or from another application) input 302 that specifies a domain (e.g., AS(s)) of interest, such as AS₁ and AS₂ in the example of FIGURE 3. Input 302 further specifies a "seed" BGP router within the domain of interest, such as BGP router A in the example of FIGURE 3. From this input information, BGP discovery engine 301 is operable to discover the peer BGP routers within the domain of interest and may include such identification of the peer BGP routers, along with other desired information about the discovered BGP routers (e.g., their relationships) in certain implementations, in BGP discovery table 305.

In the example of FIGURE 3, input 302 received by BGP discovery engine 301 specifies AS₁ and AS₂ as the domain of interest, and specifies BGP router A as a "seed" BGP router within the domain of interest. In this example embodiment, BGP discovery engine 301 stores the identification of the domain of interest (AS₁ and AS₂) to seed table 304. In response to receiving identification of BGP router A (e.g., its IP address), BGP discovery engine 301 communicatively couples to BGP router A and queries it for identification of its peer BGP routers, as well as an identification of the AS for each peer BGP router. Such query may also return other information from the BGP router, such as an identification of the current status of each of its peer BGP routers. In one embodiment discussed further below, the seed BGP router is queried for its peer table, wherein various information from the peer table may be returned to BGP discovery engine 301. Note that each router in FIGURE 3 is assumed to be speaking either EBGP, IBGP or both in this example. Other routers and nodes not speaking BGP are assumed to be attached to these networks, but will be ignored by BGP discovery engine 301, a key benefit.

In response to the query by BGP discovery engine 301 of seed BGP router A, BGP discovery engine 301 may be returned the information of table 1 below for the example of FIGURE 3.

**Table 1**

| (Results from query of seed BGP Router A of FIGURE 3) | | |
|---|---|---|
| **Peer BGP Router** | **AS** | **Status** |
| B | AS₁ | Established |
| C | AS₁ | Established |
| D | AS₂ | Established |

BGP discovery engine 301 uses the received information to begin populating BGP discovery table 305. At this point, BGP discovery engine 301 can determine that BGP router A is included in the domain of interest because it was the seed router. From the query of such seed router, BGP discovery engine 301 can determine that BGP routers B, C, and D are also included in the domain of interest as peers of seed BGP router A. More specifically, BGP discovery table 305 may be populated as shown below in Table 2.

**Table 2**

| (BGP Discovery Table) | | | | |
|---|---|---|---|---|
| **BGP Router A** | **AS**_{**1**} | Peers | AS | Status |
| | | B | AS₁ | Established |
| | | C | AS₁ | Established |
| | | D | AS₂ | Established |

| **BGP Router B** | **AS**_{**1**} | Peers | AS | Status |
|---|---|---|---|---|
| | | A | AS₁ | Established |

| **BGP Router C** | **AS**_{**1**} | Peers | AS | Status |
|---|---|---|---|---|
| | | A | AS₁ | Established |

| **BGP Router D** | **AS**_{**2**} | Peers | AS | Status |
|---|---|---|---|---|
| | | A | AS₁ | Established |

Thus, it is known at this point that four BGP routers, A-D, exist in the domain of interest (AS₁ and AS₂). Further, as can be seen from table 2, it is known that BGP router A is in AS₁ having peer BGP routers B and C that are also included in AS₁ and having peer BGP router D that is included in AS₂. Thus, the topology of the BGP routers within the domain of interest is beginning to be compiled in BGP discovery table 305.

In accordance with an embodiment of the present invention, BGP discovery engine 301 then queries each of the discovered peer BGP routers that are within the domain of interest to discover their peer BGP routers. For instance, BGP discovery engine 301 may next query discovered BGP router B in the same manner that seed BGP router A was queried. In response to the query by BGP discovery engine 301 of BGP router B, BGP discovery engine 301 may be returned the information of table 3 below for the example of FIGURE 3.

**Table 3**

| Results from query of BGP Router B of FIGURE 3) | | |
|---|---|---|
| **Peer BGP Router** | **AS** | **Status** |
| A | AS₁ | Established |
| C | AS₁ | Established |
| G | AS₃ | Established |

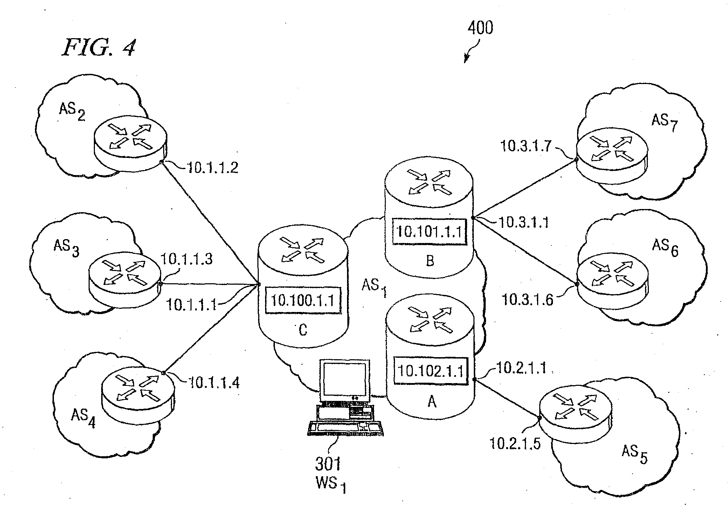

BGP discovery engine 301 uses the received information to continue populating BGP discovery table 305. At this point, BGP discovery engine 301 can further determine that BGP router B in AS₁ has peer BGP routers A (which was already known) and C in AS₁ and peer BGP router G in AS₃. Because AS₃ is not within the domain of interest, BGP router G is not included in the BGP discovery table 305. Although, as discussed further below with the example of FIGURE 4, in certain embodiments the interface of BGP router B to another BGP router outside the domain of interest may be identified in BGP discovery table 305. Thus, BGP discovery table 305 may be further updated to reflect the newly discovered information for BGP router B (e.g., that it has BGP router C as a peer, and that BGP router C thus has BGP router B as a peer), as shown below in Table 4.

**Table 4**

| (BGP Discovery Table) | | | | |
|---|---|---|---|---|
| **BGP Router** A | **AS**_{**1**} | Peers | AS | Status |
| | | B | AS₁ | Established |
| | | C | AS₁ | Established |
| | | D | AS₂ | Established |

| **BGP Router B** | **AS**_{**1**} | Peers | AS | Status |
|---|---|---|---|---|
| | | A | AS₁ | Established |
| | | C | AS₁ | Established |

| **BGP Router C** | **AS**_{**1**} | Peers | AS | Status |
|---|---|---|---|---|
| | | A | AS₁ | Established |
| | | B | AS₁ | Established |

| **BGP Router D** | **AS**_{**2**} | Peers | AS | Status |
|---|---|---|---|---|
| | | A | AS₁ | Established |

BGP discovery engine 301 may next query discovered BGP router C in the same manner that seed BGP router A was queried. In response to the query by BGP discovery engine 301 of BGP router C, BGP discovery engine 301 may be returned the information of table 5 below for the example of FIGURE 3.

**Table 5**

| (Results from query of BGP Router C of FIGURE 3) | | |
|---|---|---|
| **Peer BGP Router** | **AS** | **Status** |
| A | AS₁ | Established |
| B | AS₁ | Established |

BGP discovery engine 301 uses the received information to continue populating BGP discovery table 305. At this point, BGP discovery engine 301 can further determine that BGP router C in AS₁ has peer BGP routers A and B, both of which were already known from the above discovery. Because BGP router C does not have any further peer BGP routers, nothing further is added to BGP discovery table 305.

BGP discovery engine 301 may next query discovered BGP router D of AS₂ in the same manner that seed BGP router A was queried. In response to the query by BGP discovery engine 301 of BGP router D, BGP discovery engine 301 may be returned the information of table 6 below for the example of FIGURE 3.

**Table 6**

| (Results from query of BGP Router D of FIGURE 3) | | |
|---|---|---|
| **Peer BGP Router** | **AS** | **Status** |
| A | AS₁ | Established |
| E | AS₂ | Established |
| F | AS₂ | Established |

BGP discovery engine 301 uses the received information to continue populating BGP discovery table 305. At this point, BGP discovery engine 301 can further determine that BGP router D in AS₂ has peer BGP router A (which was already known) in AS₁ and peer BGP routers E and F in AS₂. Thus, BGP discovery table 305 may be further updated to reflect the newly discovered information for BGP router D, as shown below in Table 7.

**Table 7**

| (BGP Discovery Table) | | | | |
|---|---|---|---|---|
| BGP Router A | AS₁ | Peers | AS | Status |
| | | B | AS₁ | Established |
| | | C | AS₁ | Established |
| | | D | AS₂ | Established |

| BGP Router B | AS₁ | Peers | AS | Status |
|---|---|---|---|---|
| | | A | AS₁ | Established |
| | | C | AS₁ | Established |

| BGP Router C | AS₁ | Peers | AS . | Status |
|---|---|---|---|---|
| | | A | AS₁ | Established |
| | | B | AS₁ | Established |

| BGP Router D | AS₂ | Peers | AS | Status |
|---|---|---|---|---|
| | | A | AS₁ | Established |
| | | E | AS₂ | Established |
| | | F | AS₂ | Established |

| BGP Router E | AS₂ | Peers | AS | Status |
|---|---|---|---|---|
| | | D | AS₂ | Established |

| BGP Router F | AS₂ | Peers | AS | Status |
|---|---|---|---|---|
| | | D | AS₂ | Established |

Thus, it is known at this point that six (6) BGP routers, A-F, exist in the domain of interest (AS₁ and AS₂). Further, as can be seen from table 7, it is known that BGP routers A-C are in AS₁ each having the others as peer BGP routers. Further, from table 7 it is known that BGP router A has BGP router D of AS₂ as a peer BGP router, and BGP router D has BGP routers E and F as peers in AS₂. Thus, the topology of the BGP routers within the domain of interest is more fully compiled in BGP discovery table 305.

BGP discovery engine 301 may next query discovered BGP router F in the same manner that seed BGP router A was queried. In response to the query by BGP discovery engine 301 of BGP router F, BGP discovery engine 301 may be returned the information of table 8 below for the example of FIGURE 3.

**Table 8**

| (Results from query of BGP Router F of FIGURE 3) | | |
|---|---|---|
| **Peer BGP Router** | **AS** | **Status** |
| D | AS₂ | Established |
| E | AS₂ | Established |
| I | AS₄ | Established |

BGP discovery engine 301 uses the received information to continue populating BGP discovery table 305. At this point, BGP discovery engine 301 can further determine that BGP router F in AS₂ has peer BGP routers D (which was already known) and E in AS₂ and peer BGP router I in AS₄. Because AS4 is not within the domain of interest, BGP router I is not included in the BGP discovery table 305. Although, as discussed further below with the example of FIGURE 4, in certain embodiments the interface of BGP router F to another BGP router outside the domain of interest may be identified in BGP discovery table 305. Thus, BGP discovery table 305 may be further updated to reflect the newly discovered information for BGP router F (e.g., that it has BGP router E as a peer, and that BGP router E thus has BGP router F as a peer), as shown below in Table 9.

**Table 9**

| (BGP Discovery Table) | | | | |
|---|---|---|---|---|
| **BGP Router A** | **AS**_{**1**} | Peers | AS | Status |
| | | B | AS₁ | Established |
| | | C | AS₁ | Established |
| | | D | AS₂ | Established |

| **BGP Router B** | **AS**_{**1**} | Peers | AS | Status |
|---|---|---|---|---|
| | | A | AS₁ | Established |
| | | C | AS₁ | Established |

| **BGP Router C** | **AS**_{**1**} | Peers | AS | Status |
|---|---|---|---|---|
| | | A | AS₁ | Established |
| | | B | AS₁ | Established |

| **BGP Router D** | **AS**_{**2**} | Peers | AS | Status |
|---|---|---|---|---|
| | | A | AS₁ | Established |
| | | E | AS₂ | Established |
| | | F | AS₂ | Established |

| **BGP Router E** | **AS**_{**2**} | Peers | AS | Status |
|---|---|---|---|---|
| | | D | AS₂ | Established |
| | | F | AS₂ | Established |

| **BGP Router F** | **AS**_{**2**} | Peers | AS | Status |
|---|---|---|---|---|
| | | D | AS₂ | Established |
| | | E | AS₂ | Established |

BGP discovery engine 301 may next query discovered BGP router E in the same manner that seed BGP router A was queried. In response to the query by BGP discovery engine 301 of BGP router E, BGP discovery engine 301 may be returned the information of table 10 below for the example of FIGURE 3.

**Table 10**

| (Results from query of BGP Router E of FIGURE 3) | | |
|---|---|---|
| **Peer BGP Router** | **AS** | **Status** |
| D | AS₂ | Established |
| F | AS₂ | Established |

BGP discovery engine 301 uses the received information to continue populating BGP discovery table 305. At this point, BGP discovery engine 301 can determine that BGP router E in AS₁ has peer BGP routers A and B, both of which were already known from the above discovery. Because BGP router E does not have any further peer BGP routers, nothing further is added to BGP discovery table 305. Thus, at this point BGP discovery table 305 provides a complete topography of the BGP routers within the domain of interest (AS₁ and AS₂), and such topography was autonomously constructed by BGP discovery engine 301 responsive to input 302 specifying the domain of interest (AS₁ and AS₂) and a seed BGP router (BGP router A) within the specified domain of interest.

Turning now to FIGURE 4, a more specific operational example of one embodiment of BGP discovery engine 301 is described in conjunction with the example system 400 shown. In this example, BGP discovery engine 301 resides on workstation WS₁. As an example of operation of one embodiment of the present invention, assume that BGP discovery engine 301 is seeded with AS₁ as the domain of interest and with the IP address 10.2.1.1 as identifying a BGP router within the domain of interest (BGP router A in this example), and in this instance, using SNMP version 1, BGP discovery engine 301 is further input the community string for read-only access for the routers in AS₁, which are assumed to all have the same community string. While the user (e.g., network manager) input the IP address 10.2. 1.1 in this example, it should be recognized that the user could have chosen any of the 6 interfaces on the three routers in AS₁ to supply as the seed BGP router.

BGP discovery engine 301 then invokes an SNMP query to BGP router A (via the received IP address 10.2.1.1) requesting the MIB for bgpPeerTable. In response, a table similar to the following table 11 is returned:

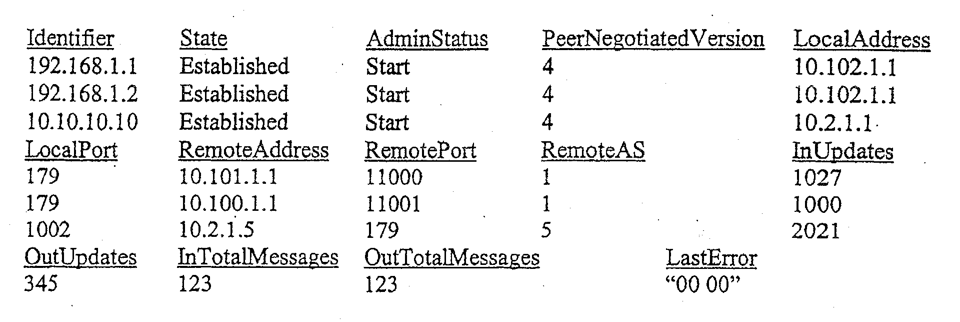

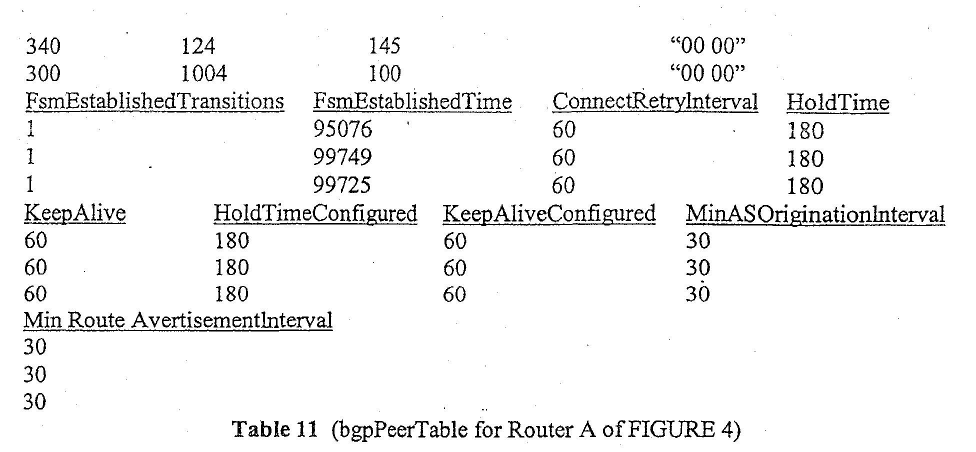

From this table, BGP discovery engine 301 selects the following information, in this example embodiment, for further use:

**Table 12**

| (Abbreviated bgpPeerTable for Router A of FIGURE 4) | | | |
|---|---|---|---|
| RemoteAS | RemoteAddress | LocalAddress | State |
| 1 | 10.101.1.1 | 10.102.1.1 | Established |
| 1 | 10.100.1.1 | 10.102.1.1 | Established |
| 5 | 10.2.1.5 | 10.2.1.1 | Established |

Using the information in table 12, BGP discovery engine 301 populates BGP discovery table 305 (which may be referred to as the "topology map") with two internal peers (BGP routers B and C) and one external peer (the BGP router of AS₅) identified by their remote address and AS numbers. Thus, BGP discovery engine 301 identifies a second interface to seed router A. That is, BGP discovery engine 301 identifies that seed router A has not only interface 10.2.1.1 (which was the seed address input to the discovery engine in this example), but also has an interface having 10.102.1.1 address, which is used for IBGP peering with routers B and C. Since the first two entries in table 12 are for AS₁, which was the seed AS (or "domain of interest") and the third entry is an external peer to which BGP discovery engine 301 does not have SNMP access, the engine sends out new queries first to 10.101.1.1 (BGP router B) and then to 10.100.1.1 (BGP router C), again requesting the bgpPeerTable MIB Table from each of these BGP routers.

In this example, the response from 10.101.1.1 (BGP router B) yields a table similar to table 11 above, from which the following information of table 13 may be extracted by BGP discovery engine 301:

**Table 13**

| (Abbreviated bgpPeerTable for Router B of FIGURE 4) | | | |
|---|---|---|---|
| RemoteAS | RemoteAddress | LocalAddress | State |
| 1 | 10.102.1.1 | 10.101.1.1 | Established |
| 1 | 10.100.1.1 | 10.101.1.1 | Established |
| 6 | 10.3.1.6 | 10.3.1.1 | Established |
| 7 | 10.3.1.7 | 10.3.1.1 | Established |

Using this information of table 13, BGP discovery engine 301 populates BGP discovery table 305 (or "topology map") with the two new external peers identified by their remote address and AS numbers, AS₆ at 10.3.1.6 and AS₇ at 10.3.1.7. It also adds interface 10.3.1.1 to router B because it is listed as the local interface for peering with AS₇ and AS₆.

Since 10.2.1.1 was the seed address and AS₆ and AS₇ are external peers, BGP discovery engine 301 only needs to further query 10.100.1.1 for bgpPeerTable yielding the following abbreviated table 14.

**Table 14**

| (Abbreviated bgpPeerTable for Router C of FIGURE 4) | | | |
|---|---|---|---|
| RemoteAS | RemoteAddress | Local Address | State |
| 1 | 10.101.1.1 | 10.100.1.1 | Established |
| 1 | 10.102.1.1 | 10.100.1.1 | Established |
| 2 | 10.1.1.2 | 10.1.1.1 | Established |
| 3 | 10.1.1.3 | 10.1.1.1 | Established |
| 4 | 10.1.1.4 | 10.1.1.1 | Established |

BGP discovery engine 301 populates BGP discovery table 305 (or "topology map") with the three new external peers identified by their remote address and AS numbers, AS₂ at 10.1.1.2, AS₃ at 10.1.1.3, and AS₄ at 10.1.1.4. It also adds interface 10.1.1.1 to router C due to it being the local address listed for peering with AS₂, AS₃, and AS4. In the end, BGP discovery engine generates a BGP discovery table 305 (or "topology map") similar to table 15 below.

**Table 15**

| (BGP Peer Topology Discovery Table for FIGURE 4) | | | | |
|---|---|---|---|---|
| Router A Interfaces | Peer Address | Peer AS | Intern/Extem | State |
| 10.102.1.1 | 10.101.1.1 | 1 | I | Established |
| | 10.100.1.1 | 1 | I | Established |
| 10.2.1.1 | 10.2.1.5 | 5 | E | Established |

| Router B Interfaces | Peer Address | Peer AS | Intern/Extern | Sate |
|---|---|---|---|---|
| 10.101.1.1 | 10.100.1.1 | 1 | I | Established |
| | 10.102.1.1 | 1 | I | Established |
| 10.3.1.1 | 10.3.1.6 | 6 | E | Established |
| | 10.3.1.7 | 7 | E | Established |

| Router C Interfaces | Peer Address | Peer AS | Inter/Extern | State |
|---|---|---|---|---|
| 10.100.1.1 | 10.101.1.1 | 1 | I | Established |
| | 10.102.1.1 | 1 | I | Established |
| 10.1.1.1 | 10.1.1.2 | 2 | E | Established |
| | 10.1.1.3 | 3 | E | Established |
| | 10.1.1.4 | 4 | E | Established |

Thus, the information compiled in table 15 identifies the topology of the BGP routers within the domain of interest (i.e., AS₁ in the above example). Using the information in table 15, a graphical map may be drawn similar to that in FIGURE 4 and/or textual information may be output that describes the topology of the BGP routers in the domain of interest. Accordingly, having only known a domain of interest (e.g., AS₁), a single interface address on a single BGP router within such domain of interest, and the SNMP read-only community string, discovery engine 301 is able to compile the topology of all BGP routers within the domain of interest. While discovery engine 301 was seeded a single AS in the above example, by seeding discovery engine 301 with all ASs managed within a domain (as with AS₁ and AS₂ in the example of FIGURE 3) such discovery engine 301 may produce topology maps for multi-AS domains.

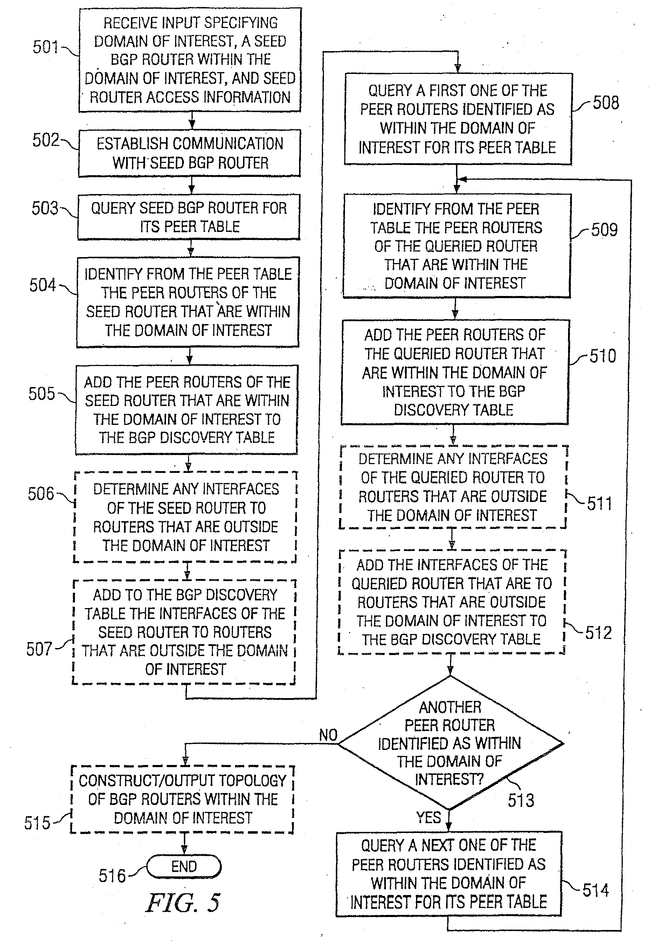

Turning to FIGURE 5, an example operational flow diagram for BGP discovery engine 301 in accordance with one embodiment of the present invention is shown. As shown, BGP discovery engine 301 receives input (e.g., input 302 in the example of FIGURE 3) specifying a domain of interest (e.g., one or more ASs), a seed BGP router within the domain of interest in operational block 501, and device access information to allow access to the seed router (e.g. an SNMP community string). In operational block 502, BGP discovery engine 301 establishes communication with the seed BGP router, and in block 503 BGP discovery engine 301 queries (e.g., using an SNMP query) the seed BGP router for its peer table. BGP discovery engine 301 receives the requested peer table (not shown), and in block 504 identifies from the peer table the peer routers of the seed router that are within the domain of interest. In operational block 505, BGP discovery engine 301 adds the peer routers of the seed router that are within the domain of interest to BGP discovery table 305. That is, discovery engine 301 populates BGP discovery table 305 with information determined from the seed router's peer table regarding the topology of BGP routers within the domain of interest.

In certain embodiments, operational blocks 506 and 507 (shown in dashed-lines in FIGURE 5 as being optional in this example implementation) may be performed by BGP discovery engine 301. More specifically, in operational block 506 BGP discovery engine 301 determines, from the seed router's peer table, any interfaces of the seed router to router(s) that are outside the domain of interest, and in operational block 507 adds to BGP discovery table 305 identification of any such interfaces of the seed router, as described above with the example of FIGURE 4.

In operational block 508, BGP discovery engine 301 establishes communication with (not shown) and queries (e.g., using an SNMP query) a first one of the peer routers identified as within the domain of interest for its peer table. BGP discovery engine 301 receives the requested peer table (not shown), and in block 509 identifies from the peer table the peer routers of the queried peer router that are within the domain of interest. In operational block 510, BGP discovery engine 301 adds the peer routers of the queried router that are within the domain of interest to BGP discovery table 305. That is, discovery engine 301 populates BGP discovery table 305 with further information determined from the queried router's peer table regarding the topology of BGP routers within the domain of interest.

In certain embodiments, operational blocks 511 and 512 (shown in dashed-lines in FIGURE 5 as being optional in this example implementation) may be performed by BGP discovery engine 301. More specifically, in operational block 511 BGP discovery engine 301 determines, from the queried router's peer table, any interfaces of the queried router to router(s) that are outside the domain of interest, and in operational block 512 adds to BGP discovery table 305 identification of any such interfaces of the queried router, as described above with the example of FIGURE 4.

BGP discovery engine 301 then determines, in block 513, whether there exists another peer router that has been identified as within the domain of interest (e.g., that has been written to BGP discovery table 305) that has not yet been queried for its peer table. If at least one more peer router exists in the domain of interest that has not yet been queried for its peer table, operation advances to block 514 whereat BGP discovery engine 301 establishes communication with (not shown) and queries (e.g., using an SNMP query) a next one of the peer routers identified as within the domain of interest for its peer table. Operation then returns to block 509.

Once BGP discovery engine 301 determines in block 513 that all of the identified peer routers in the domain of interest have been queried for their respective peer tables, operation may, in certain embodiments, advance to operational block 515 (shown in dashed-lines in FIGURE 5 as being optional in this example implementation). In operational block 515, BGP discovery engine 301 may construct and output a representation of the topology of BGP routers within the specified domain of interest. Such representation may, for example, comprise textual output (e.g., a table, flat file, etc.), and/or it may comprise a graphical representation of the determined topology. The operation may end in block 516.

When implemented via computer-executable instructions, various elements of the BGP discovery engine of embodiments of the present invention are in essence the software code defining the operations thereof. The executable instructions or software code may be obtained from a readable medium (e.g., a hard drive media, optical media, EPROM, EEPROM, tape media, cartridge media, flash memory, ROM, memory stick, and/or the like) or communicated via a data signal from a communication medium (e.g., the Internet). In fact, readable media can include any medium that can store or transfer information.

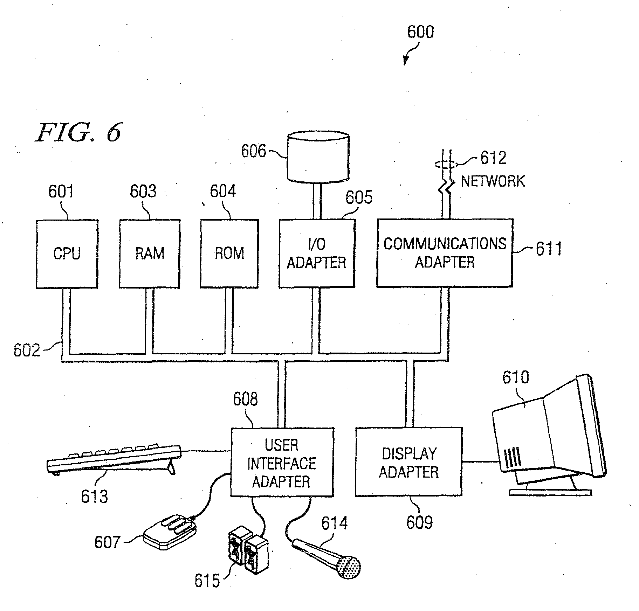

FIGURE 6 illustrates an example computer system 600 adapted according to an embodiment of the present invention to implement a BGP discovery engine as described above. That is, computer system 600 comprises an example system on which embodiments of the present invention may be implemented (such as BGP discovery engine 301). Central processing unit (CPU) 601 is coupled to system bus 602. CPU 601 may be any general purpose CPU, and the present invention is not restricted by the architecture of CPU 601 as long as CPU 601 supports the inventive operations as described herein. CPU 601 may execute the various logical instructions according to embodiments of the present invention. For example, CPU 601 may execute machine-level instructions according to the operational examples described above with FIGURES 3 and 4 and/or in accordance with the exemplary operational flow described above in conjunction with FIGURE 5.

Computer system 600 also preferably includes random access memory (RAM) 603, which may be SRAM, DRAM, SDRAM, or the like. Computer system 600 preferably includes read-only memory (ROM) 604 which may be PROM, EPROM, EEPROM, or the like. RAM 603 and ROM 604 hold user and system data and programs, as is well known in the art, such as data associated with BGP discovery engine 301 (e.g., seed table 304 and/or BGP discovery table 305).

Computer system 600 also preferably includes input/output (I/O) adapter 605, communications adapter 611, user interface adapter 608, and display adapter 609. I/O adapter 605, user interface adapter 608, and/or communications adapter 611 may, in certain embodiments, enable a user to interact with computer system 600 in order to input information, such as input 302 in the example of FIGURE 3.

I/O adapter 605 preferably connects to storage device(s) 606, such as one or more of hard drive, compact disc (CD) drive, floppy disk drive, tape drive, etc. to computer system 600. The storage devices may be utilized when RAM 603 is insufficient for the memory requirements associated with storing data for BGP discovery engine 301. Communications adapter 611 is preferably adapted to couple computer system 600 to network 612 (e.g., to an AS of interest). User interface adapter 608 couples user input devices, such as keyboard 613, pointing device 607, and microphone 614 and/or output devices, such as speaker(s) 615 to computer system 600. Display adapter 609 is driven by CPU 601 to control the display on display device 610 to, for example, display a user interface (e.g., for receiving input information from a user and/or to output BGP topology information to a user).

It shall be appreciated that the present invention is not limited to the architecture of system 600. For example, any suitable processor-based device may be utilized including without limitation personal computers, laptop computers, computer workstations, and multi-processor servers. Moreover, embodiments of the present invention may be implemented on application specific integrated circuits (ASICs) or very large scale integrated (VLSI) circuits. In fact, persons of ordinary skill in the art may utilize any number of suitable structures capable of executing logical operations according to the embodiments of the present invention.

It should also be appreciated that while the examples described above are for discovery of BGP router topology, embodiments of the present invention may be similarly used for discovery of the topology of other types of routers. For instance, any routers that maintain a list of their respective peer routers may have their topology discovered by a discovery engine in the manner described above. Thus, while embodiments of the present invention are particularly applicable for discovery of BGP router topology, those of ordinary skill in the art will appreciate that such embodiments may be used for recursively querying identified routers of any type within a domain of interest for compiling their topology.

Although the present invention and its advantages have been described in detail, it should be understood that various changes, substitutions and alterations can be made herein without departing from the invention as defined by the appended claims. Moreover, the present application is not intended to be limited to the particular embodiments of the process, machine, manufacture, composition of matter, means, methods and steps described in the specification. As one will readily appreciate from the disclosure, processes, machines, manufacture, compositions of matter, means, methods, or steps, presently existing or later to be developed that perform substantially the same function or achieve substantially the same result as the corresponding embodiments described herein may be utilized. Accordingly, the appended claims are intended to include within their scope such processes, machines, manufacture, compositions of matter, means, methods, or steps.

## Claims

1. A method comprising:
receiving 501 at a discovery engine 301 identification of a domain of interest and identification of a seed router within the domain of interest;
the discovery engine querying 503 the seed router for information including identification of its peer routers;
receiving at the discovery engine the information from the seed router;
from the information received from the seed router, the discovery engine determining 504 at least one peer router of the seed router;
the discovery engine querying 508 the at least one peer router for information including identification of its peer routers; and
the discovery engine compiling 505, 510 topology information for the routers within the domain of interest.

2. The method of claim 1 wherein the routers comprise said information including identification of their respective peer routers.

3. The method of claim 2 wherein the routers are routers that communicate via a common protocol.

4. The method of claim 3 wherein the common protocol comprises Border Gateway Protocol (BGP).

5. The method of claim 1 further comprising:
receiving at said discovery engine access information for the seed router.

6. A Border Gateway Protocol (BGP) router discovery engine 301 comprising:
computer-executable software code stored to a computer-readable medium 603, 604, 606, the computer-executable software code comprising code for querying 503 a seed BGP router within a domain of interest for information from its peer table, code for receiving the peer table information from the seed BGP router, code for determining 504 from the peer table information received from the seed BGP router each peer router of the seed router, code for querying 508 each peer router of the seed router for information from its respective peer table; and
a processor 601 for executing the computer-executable software code.

7. The BGP router discovery engine of claim 6 comprising:
code for using the peer table information received from the queried routers for compiling topology information for the BGP routers within the domain of interest.

8. The BGP router discovery engine of claim 7 wherein said topology information comprises:
identification of interfaces of each BGP router within said domain of interest, identification of all peer routers of each BGP router within said domain of interest, and indication of state of each BGP router within said domain of interest.

9. The BGP router discovery engine of claim 6 further comprising:
code for identifying from the peer table information received from a queried BGP router any newly discovered peer router not yet queried for its peer table information; and
code for querying said newly discovered peer router for information from its peer table.

10. A system comprising:
means 301 for recursively querying identified BGP routers within a domain of interest for their respective peer tables and identifying from their respective peer tables their respective peer BGP routers within the domain of interest; and
means 305 for compiling from the information received from the queried BGP routers a topology of the BGP routers within the domain of interest.
